# EUROPEAN PATENT APPLICATION

(11) **EP 3 444 700 A1**
(43) Date of publication of application: **20.02.2019**
(21) Application number: 16906036.5
(22) Date of filing: 31.08.2016
(51) Int. Cl.: G06F 1/16, G06F 3/01

(54) **ELECTRONIC DEVICE AND SIGNAL DETECTION METHOD**

(30) Priority: 21.06.2016 CN 201610452486
(71) Applicant: ZTE Corporation, Shenzhen, Guangdong 518057 (CN)
(72) Inventor: GONG, Jinchao, Shenzhen Guangdong 518057 (CN); WU, Ling, Shenzhen Guangdong 518057 (CN)
(74) Representative: HGF Limited
(86) International application number: PCT/CN2016/097592
(87) International publication number: WO 2017/219496

(57) **Abstract**

Disclosed are an electronic device and a signal detection method. The electronic device includes: a housing; a sensor module, disposed in the housing and including one or more sensors; a driving apparatus, disposed in the housing, connected to the sensor module, and arranged to drive the sensor module to move, wherein when the one or more sensors move to a predetermined position, the sensor having moved to the predetermined position is triggered to start signal acquisition. The above structure of the present invention can solve the problem in the related art that more sensors cannot be disposed in an electronic device. Thus, more sensors can be simply and conveniently disposed in an electronic device. Furthermore, a sensor specified by a user can be switched to according to actual demands.

## Description

### Technical Field

Embodiments of the present invention relate, but not limited to, the field of electro-mechanics, and more particularly to an electronic device and a signal detection method.

### Background

With the development of technology, people's needs are also increasing. For example, the functions of mobile terminals need to be added to traditional electronic devices. For watches that can only be used for displaying time in the past, network functions are also required to be able to interact with other traditional mobile terminals. Payment can even be implemented while shopping. Due to the portability of watches, many smart watches have the function of measuring human parameters, such as blood pressure, heart rate, and body temperature. In the related art, the above human parameters are measured and obtained by a sensor located inside a smart watch via a measuring hole. Furthermore, each sensor corresponds to a dedicated measuring hole. However, under the limitation of personal factors of a user (such as the wrist thickness of a user), and since a measuring hole needs to occupy a certain area, the quantity of sensors that can be disposed on a smart watch is often small, and the function is relatively simple.

A common solution in the related art is as follows: some sensors are placed on the surface of a watch. Although more sensors can be disposed to some extent, as the quantity of sensors is increasing, the area of measuring holes is also increasing, and the content displaying area of the watch is reducing, which is not very friendly for users who use smart watches. Therefore, in the related art, there has not been a better solution to solve the problem that more sensors cannot be disposed in an electronic device.

### Summary

The following is a brief introduction for a subject described herein in detail. The brief introduction is not intended to restrict the scope of protection of claims.

The embodiments of the present invention provide an electronic device and a signal detection method, intended to at least solve the problem in the related art how to dispose more sensors in an electronic device.

According to an embodiment of the present invention, an electronic device is provided. The electronic device includes: a housing 1, a sensor module 2 and a driving apparatus 3.

The sensor module 2 is disposed in the housing 1 and includes one or more sensors 21.

The driving apparatus 3 is disposed in the housing 1, connected to the sensor module, and arranged to drive the sensor module 2 to move, wherein when the one or more sensors 21 move to a predetermined position, the sensor 21 is started to perform signal detection.

Alternatively, the sensor module 2 further includes: a circuit board, connected to the driving apparatus 3, the one or more sensors 21 being disposed on one or two surfaces of the circuit board 4.

Alternatively, the housing 1 is further provided with a sensor detection hole 11.

When the one or more sensors 21 move to a detection hole 11 corresponding to the predetermined position, the sensor having moved to the predetermined position performs signal detection through the detection hole 11.

Alternatively, one or a plurality contact terminals 21' respectively connected to the one or more sensors 21 are disposed on one or two surfaces of the circuit board 4.

The electronic device further includes: a main board 5, assembled on the housing 1, wherein a connector 51 is fixed to the main board 5, and the connector 51 is respectively in contact with the contact terminals corresponding to the one or more sensors 21 in the plurality of contact terminals 21', so as to enable the one or more sensors.

Alternatively, the circuit board 4 further includes: one or more positioning holes 41, located on the circuit board 4.

Alternatively, the main board 5 further includes: a positioning probe 52, fixed to the main board 5, the positioning probe 52 being inserted into at least one positioning hole in the one or more positioning holes 41 when the connector 51 contacts the contact terminal 21', so as to fix the circuit board 4.

Alternatively, the driving apparatus 3 includes: a dial 3A or a motor 3B.

Alternatively, a dial plate 31A is a disk structure with a toothed edge, and the circuit board 4 is a toothed disk structure that cooperates with the dial plate 31A.

Alternatively, when the driving apparatus 3 is a motor 3B, the electronic device further includes: a controller, arranged to generate an operation instruction for driving the motor 3B. The motor 3B is fixed to the main board 5 and arranged to drive the circuit board 4 to rotate when receiving the operation instruction sent by the controller.

Alternatively, the plurality of contact terminals 21' and the connector 51 are both of array arrangement structure.

According to another embodiment of the present invention, a signal detection method is also provided. The method includes: receiving an operation instruction of a user on an electronic device; driving a sensor module to move under the trigger of the operation instruction; and when one or more sensors in the sensor module move to a predetermined position, starting the sensor to perform signal detection.

Alternatively, the step of receiving an operation instruction of a user on an electronic device includes: receiving the operation instruction generated by operations of the user on an operation interface of the electronic device.

According to yet another embodiment of the present invention, a storage medium is also provided. The storage medium is arranged to store program codes for performing the following steps:
S1: receiving an operation instruction of a user on an electronic device;
S2: driving a sensor module to move under the trigger of the operation instruction; and
S3: when one or more sensors in the sensor module move to a predetermined position,
starting the sensor to perform signal detection.

According to the present invention, a driving apparatus drives one or more sensors in a sensor module to move, and when the sensor moves to a predetermined position, the sensor is started to perform signal detection. Therefore, the problem that more sensors cannot be disposed in an electronic device is solved. Thus, more sensors can be simply and conveniently disposed in an electronic device. Furthermore, the objective of switching to a sensor specified by a user according to actual demands is also achieved.

Other features and advantages of the embodiments of the present invention will be set forth in the following description, and they are partially apparent from the description or understood by implementing the present invention. The objectives and other advantages of the present invention can be achieved and obtained by the structure particularly indicated in the description, claims and drawings.

Other aspects will be apparent upon reading and understanding the drawings and detailed description.

### Brief Description of Drawings

The drawings described herein are intended to provide a further understanding of the present invention, and they are intended to be a part of the present invention. The schematic embodiments and descriptions of the present invention are intended to explain the present invention, and do not form improper limitation to the present invention. In the drawing:
FIG. 1 is a structural diagram of an electronic device according to an embodiment of the present invention.
FIG. 2 is a structural diagram of a housing according to an embodiment of the present invention.
FIG. 3 is a structural diagram of a dial according to an embodiment of the present invention.
FIG. 4 is a structural diagram of a sensor module according to an embodiment of the present invention.
FIG. 5 is a structural diagram of another electronic device according to an embodiment of the present invention.
FIG. 6 is a structural diagram of a main board according to an embodiment of the present invention.
FIG. 7 is a structural diagram of an electronic device according to an embodiment of the present invention.
FIG. 8 is a structural diagram of a housing according to an embodiment of the present invention.
FIG. 9 is a structural diagram of a sensor module according to an embodiment of the present invention.
FIG. 10 is a structural diagram of another electronic device according to an embodiment of the present invention.
FIG. 11 is a structural diagram of a main board according to an embodiment of the present invention.
FIG. 12 is a flowchart of sensor switching according to an embodiment of the present invention.
FIG. 13 is a flowchart of a signal detection method according to an embodiment of the present invention.

### Detailed Description

The present invention will be described hereinafter with reference to the drawings and in conjunction with the embodiments. It is to be noted that the embodiments in the present application and the features in the embodiments may be combined with each other without conflict.

It is to be noted that the terms "first", "second", and the like in the description and claims and the above drawings of the present invention are used to distinguish similar objects, and are not necessarily used to describe a particular order or sequence.

An electronic device in the present application may include, but is not limited to, a multi-sensor smart watch, a mobile terminal, a smart bracelet, a smart earphone, a smart hearing aid, smart glasses, a Virtual Reality (VR) device, and other wearable devices, which can be used for health monitoring.

### Embodiment 1

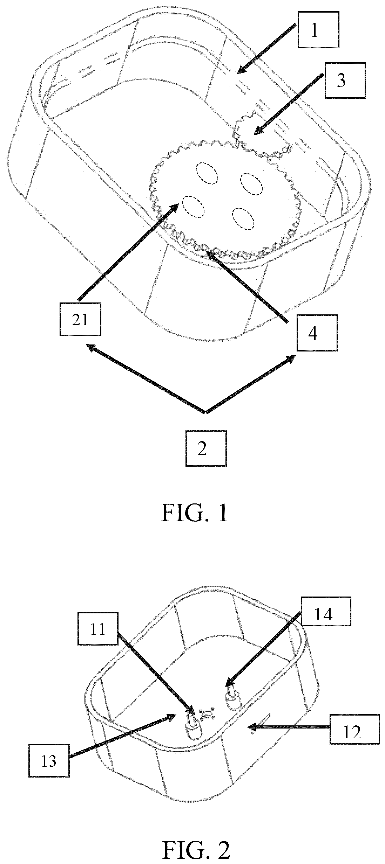

An electronic device is provided in the present embodiment. FIG. 1 is a structural diagram of an electronic device according to an embodiment of the present invention. As shown in FIG. 1, the device includes: a housing 1, a sensor module 2 and a driving apparatus 3.

The sensor module 2 is disposed in the housing 1 and includes one or more sensors 21.

The driving apparatus 3 is disposed in the housing 1, connected to the sensor module, and arranged to drive the sensor module 2 to move, wherein when the one or more sensors 21 move to a predetermined position, the sensor 21 is triggered to start signal acquisition.

Alternatively, as shown in FIG. 1, the sensor module 2 further includes: a circuit board 4, and the one or more sensors 21 are disposed on one or two surfaces of the circuit board 4, and the circuit board is connected to the driving apparatus 3.

It is to be noted that the driving apparatus 3 and the circuit board 4 used in the present embodiment may each be a toothed disk structure. Furthermore, the circuit board in FIG. 1 only exemplarily displays four sensors. However, in practical applications, other quantities of sensors can be disposed on the size of the circuit board according to the size of the circuit board and sensor. Furthermore, in the present embodiment, the driving apparatus 3 is used as a dial as an example. The following description is based on the use of a dial as a driving apparatus. Furthermore, an electronic device in the present embodiment is a wearable device, which can be used for health monitoring (such as a multi-sensor smart watch, a mobile terminal, a smart bracelet, a smart earphone, a smart hearing aid, smart glasses, and a VR device).

FIG. 2 is a structural diagram of a housing according to an embodiment of the present invention. As shown in FIG. 2, the housing 1 includes: a detection hole 11 and a dial transfer opening 12.

For the detection hole 11, when the one or more sensors move to the detection hole 11 corresponding to the predetermined position, the sensor 21 performs signal detection through the detection hole 11.

The dial transfer opening 12 is located on the side surface of the housing 1 for exposing a portion of the dial to the outside of the housing 1.

Alternatively, as shown in FIG. 2, the housing 1 is further provided with an assembly shaft 13 and a dial assembly shaft 14.

The assembly shaft 13 is fixed to the housing 1 and the circuit board 4 is fixed to the housing by means of insertion.

The dial assembly shaft 14 is fixed to the housing 1 and the dial is fixed to the housing 1 by means of insertion.

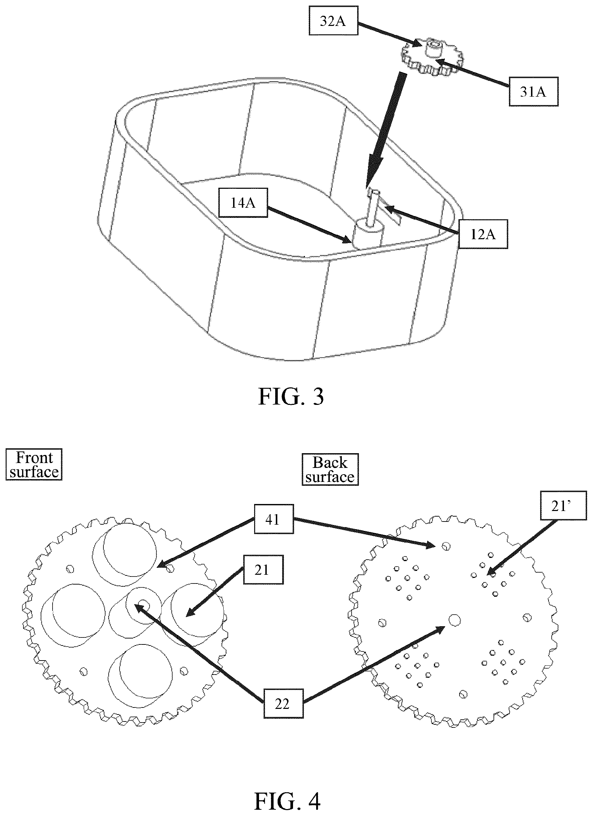

FIG. 3 is a structural diagram of a dial according to an embodiment of the present invention. As shown in FIG. 3, the dial at least includes: a dial plate 31A.

For the dial plate 31A, one side of the dial plate 31A is exposed to the outside of the housing 1 through a dial transfer opening 12A for the hand-dial operation of a user, and the other side of the dial plate 31A can be connected to the circuit board, and when the user turns the dial plate 31A, the circuit board 4 can be driven to rotate.

Alternatively, as shown in FIG. 3, the dial plate 3A further includes: a second assembly hole 32A.

The second assembly hole 32A is assembled on a dial assembly shaft 14A fixed to the housing 1 to fix the dial plate 31A.

FIG. 4 is a structural diagram of a sensor module according to an embodiment of the present invention. As shown in FIG. 4, the sensor module includes, in addition to one or more sensors 21 and the circuit board 4, a plurality of contact terminals 21' and a plurality of positioning holes 41.

The contact terminals 21' are disposed on a circuit board 3, and they are located on one or two surfaces of the circuit board 4. Furthermore, the contact terminals 21' are connected to multiple sensors. When one or more sensors in the multiple sensors perform signal detection, the contact terminals 21' can receive a detected signal.

The positioning holes 41 are located on the circuit board 3.

Alternatively, as shown in FIG. 4, the sensor module further includes: a first assembly hole 22.

The first assembly hole 22 is assembled on an assembly shaft 13 fixed to the housing 1 to fix the circuit board 4.

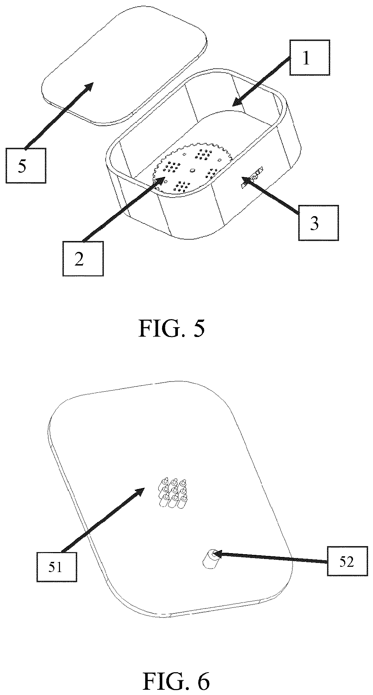

FIG. 5 is a structural diagram of another electronic device according to an embodiment of the present invention. As shown in FIG. 5, on the basis of the electronic device of FIG. 1 to FIG. 4, the main board 5 is further included. The main board 5 is assembled on the housing 1.

FIG. 6 is a structural diagram of a main board according to an embodiment of the present invention. As shown in FIG. 6, the main board 5 at least includes: a connector 51 and a positioning probe 52.

The connector 51 is fixed to the main board 5, and is in contact with the contact terminals corresponding to the one or more sensors in one or more contact terminals 21' located on the circuit board 4, so as to enable the one or more sensors.

Specifically, the operation of enabling the one or more sensors includes: instructing the sensor having moved to the predetermined position to start signal acquisition, and receiving measurement data of one or more sensors.

The positioning probe 52 is inserted into at least one positioning hole in the multiple positioning holes 41 (as shown in FIG. 4) to fix the circuit board 4.

Specifically, when the positioning probe is inserted into the positioning hole, the sensor corresponding to the positioning hole is the one or more sensors indicated above, and signal detection can be performed through the sensor detection hole 11.

Alternatively, the connector may be a pogopin contact module. Furthermore, the connector 51 and the positioning probe 52 can be represented as a retractable spring head fixed to the main board 5 by welding.

Alternatively, the plurality of contact terminals 21' and the connector 52 are both of array arrangement structure.

In addition, in conjunction with FIG. 1 to FIG. 6, the following application scenarios are also provided in the present embodiment to facilitate understanding of the operating principle of the above electronic device structure in the present embodiment.

### Scenario 1

When a user dials the dial plate 31A on an outer side of the housing 1, the dial plate 31A on an inner side of the housing 1 also rotates. At this time, the dial will drive the circuit board 4 to rotate. When the circuit board 4 starts to rotate, the positioning probe 52 on the main board 5 is retracted from a positioning hole corresponding to an original sensor. Then, as the user continues to dial the dial, when one or more sensors enter the position of the sensor detection hole 11 on the housing 1, the positioning probe 52 on the main board 5 is also just inserted into the positioning hole corresponding to one or more sensors. The main board 5 is positioned here, since the positioning probe 52 is positioned in place, a feeling such as vibration will be fed back to a user, and after receiving the feedback, the user knows that the current sensor is a target sensor, and also knows the position status of the target sensor. On the other hand, when the circuit board 4 is rotated to the target sensor, the connector 51 on the main board 5 will come into contact with a feed point of the contact terminal 21' to which the target sensor is connected, so that the electrical function is effective. At this time, the connector 51 can acquire data, when the target sensor performs signal measurement through the sensor detection hole 11, by the contact terminal 21' in contact.

### Scenario 2

It is to be noted that for an electronic device having only one sensor, the above device can also be implemented in the present embodiment. In particular, the driving apparatus 3 is also used to switch on or off the sensor function. When a user dials the dial plate 31A on an outer side of the housing 1 for switching on the sensor function, the dial plate 31A on an inner side of the housing 1 also rotates. At this time, the dial 3A will drive the circuit board 4 to rotate. When the circuit board 4 starts to rotate, the positioning probe 52 on the main board 5 is retracted from the positioning hole corresponding to the switched-off sensor function. Then as the user continues to dial the dial, when a sensor enters the position of the sensor detection hole 11 on the housing 1, the positioning probe 52 on the main board 5 is also just inserted into the positioning hole corresponding to the sensor. The main board 5 is positioned here, since the positioning probe 52 is positioned in place, a feeling will be fed back to the user, and after receiving the feedback, the user knows that the electronic device switches on the sensor function. On the other hand, when the circuit board 4 is rotated to the sensor, the connector 51 on the main board 5 will come into contact with a feed point of the contact terminal 21' to which the sensor is connected, so that the electrical function is effective. At this time, the connector 51 can acquire data, when the target sensor performs signal measurement through the sensor detection hole 11, by the contact terminal 21' in contact.

### Embodiment 2

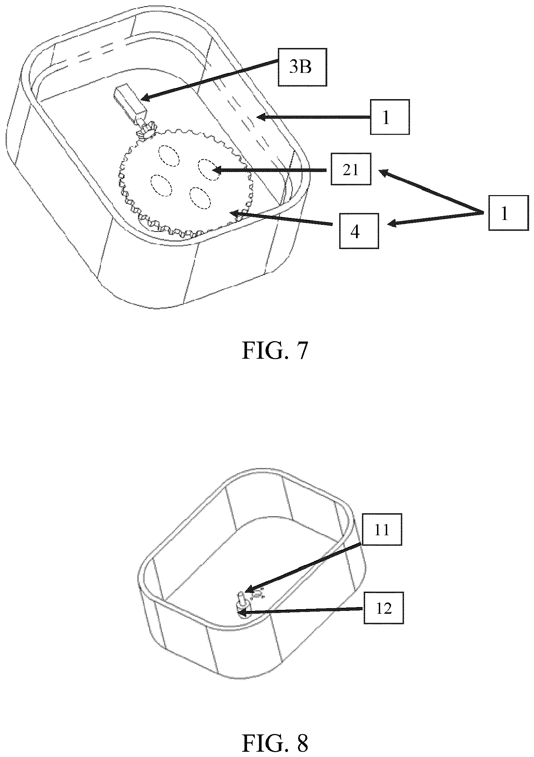

An electronic device is provided in the present embodiment. FIG. 7 is a structural diagram of an electronic device according to an embodiment of the present invention. As shown in FIG. 1 and FIG. 7, the device includes: a housing 1, a sensor module 2 and a driving apparatus 3B.

The sensor module 2 is disposed in the housing 1 and includes one or more sensors 21.

The driving apparatus 3 is disposed in the housing 1, connected to the sensor module, and arranged to drive the sensor module 2 to move, wherein when the one or more sensors 21 move to a predetermined position, the sensor having moved to the predetermined position is triggered to start signal acquisition.

Alternatively, the sensor module 2 further includes: a circuit board 4, and the one or more sensors 21 are disposed on one or two surfaces of the circuit board 4, and the circuit board is connected to the driving apparatus 3.

It is to be noted that the circuit board used in the present embodiment may be a toothed disk structure. Furthermore, the circuit board in FIG. 7 only exemplarily displays four sensors. However, in practical applications, other quantities of sensors can be disposed on the circuit board according to the size of the circuit board and the sensor. Furthermore, in the present embodiment, the driving apparatus 3 is used as a motor as an example. Furthermore, an electronic device in the present embodiment is a wearable device, which can be used for health monitoring (such as a multi-sensor smart watch, a mobile terminal, a smart bracelet, a smart earphone, a smart hearing aid, smart glasses, and a VR device). FIG. 8 is a structural diagram of a housing according to an embodiment of the present invention. As shown in FIG. 8, the housing 1 includes: a detection hole 11.

For the detection hole 11, when the one or more sensors move to the sensor detection hole 11, the one or more sensors perform signal detection through the sensor detection hole 11.

Alternatively, as shown in FIG. 8, the housing 1 further includes:
an assembly shaft 12, fixed to the housing 1 to fix the circuit board 4 to the housing by means of insertion.

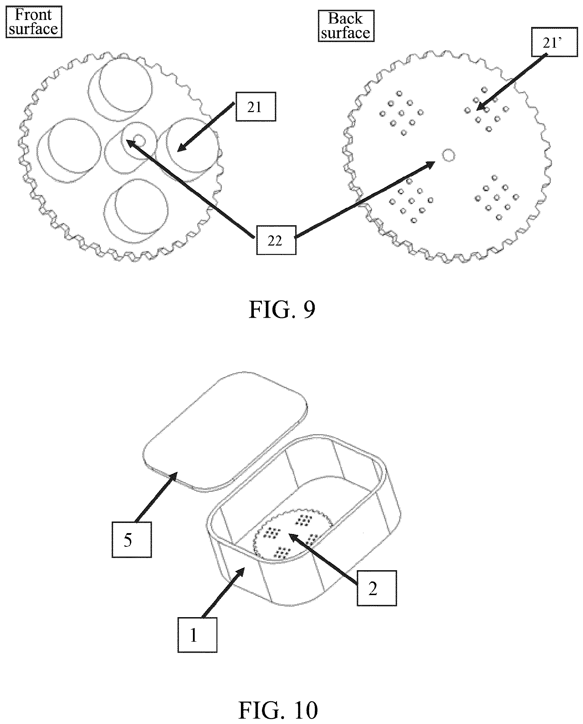

FIG. 9 is a structural diagram of a sensor module according to an embodiment of the present invention. As shown in FIG. 9, the sensor module includes, in addition to one or more sensors 21 and the circuit board 4, a plurality of contact terminals 21'.

The contact terminals 21' are disposed on a circuit board 4, and are located on one or two surfaces of the circuit board 4. Furthermore, the contact terminals 21' are connected to one or more sensors. When one or more sensors perform signal detection, the contact terminals 21' can receive a detected signal.

Alternatively, as shown in FIG. 9, the sensor module 2 further includes: a first assembly hole 22.

The first assembly hole 22 is assembled on the assembly shaft 13 fixed to the housing 1 to fix the circuit board 4.

FIG. 10 is a structural diagram of an electronic device according to an embodiment of the present invention. As shown in FIG. 5, the electronic device in the present embodiment further includes: a main board 5. The main board 5 is assembled on the housing 1.

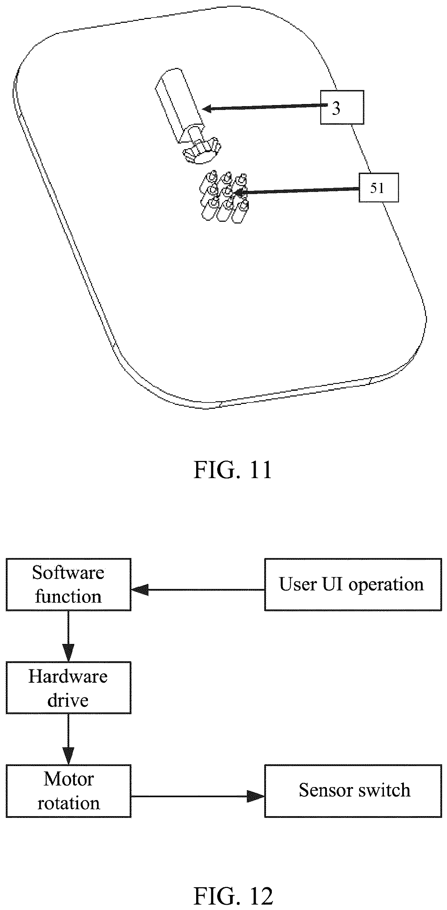

FIG. 11 is a structural diagram of a main board according to an embodiment of the present invention. As shown in FIG. 11, the main board 5 includes: a motor 3 and a connector 51.

The motor 3 includes a motor body 31B, a rotating shaft 32B and a rotor 33B.

Specifically, the motor 3B is specified on the main board 5 by means of patching or crimping.

The connector 51 is fixed to the main board 5, and it is in contact with the contact terminals corresponding to the one or more sensors in one or more contact terminals 21' located on the circuit board 3, so as to enable the one or more sensors.

Specifically, the operation of enabling the one or more sensors includes: instructing one or more sensors to start signal acquisition, and receiving measurement data of one or more sensors. Alternatively, the connector may be a pogopin contact module. Furthermore, the connector 51 can be represented as a retractable spring head fixed to the main board 5 by welding.

Alternatively, the multiple contact terminals 21' and the connector 51 are both of array arrangement structure.

Specifically, the operation of enabling the one or more sensors includes: instructing one or more sensors to perform signal detection, and receiving measurement data of one or more sensors.

In addition, the following application scenarios are also provided in the present embodiment to facilitate understanding of the operating principle of the above electronic device structure in the present embodiment.

FIG. 12 is a flowchart of sensor switching according to an embodiment of the present invention. As shown in FIG. 12, the following application scenarios are also provided in the present embodiment to facilitate understanding of the operating principle of the above electronic device structure in the present embodiment.

### Scenario 1:

When a user operates an electronic device through a UI interface (e.g., switching to a target sensor), the sensor switching software in the electronic device drives a hardware structure in the electronic device (e.g., starting a hardware processor) upon receiving an operation instruction of the user. After receiving a driving instruction, the hardware structure sends a motor rotation instruction to the motor body 31B in the motor 3B. After the motor body 31B receives a rotation instruction sent by the electronic device, the rotating shaft 32B is driven to drive the rotor 33B to rotate. In conjunction with FIG. 7 to FIG. 11, the circuit board 4 is rotated. A distance parameter between two sensors is a fixed value. Therefore, after receiving a sensor driving instruction, the sensor switching software may calculate the switching time of switching to the target sensor according to the distance parameter. When the switching time is met, the sensor switching software terminates the driving of the hardware structure in the electronic device. At this time, the target sensor disposed on the circuit board will just turn to the sensor detection hole 11 of the housing 1 to perform signal detection through the sensor detection hole 11. On the other hand, when the circuit board 4 is rotated to the target sensor, the connector 51 on the main board 5 will come into contact with a feed point of the contact terminal 21' to which the target sensor is connected, so that the electrical function is effective. At this time, the connector 51 can acquire data, when the target sensor performs signal measurement through the sensor detection hole 11, by the contact terminal 21' in contact.

### Scenario 2:

It is to be noted that for an electronic device having only one sensor, the above device can also be implemented in the present embodiment. In particular, the driving apparatus 3 is also used to switch on or off the sensor function. When a user operates an electronic device through a UI interface (e.g., switching to a target sensor), the sensor switching software in the electronic device drives a hardware structure in the electronic device (e.g., starting a hardware processor) upon receiving an operation instruction of the user. After receiving a driving instruction (including a sensor function switch-on instruction or a sensor function switch-off instruction, where the sensor function switch-on instruction is used in the present scenario), the hardware structure sends a motor rotation instruction to the motor body 31B in the motor 3B. After the motor body 31B receives the rotation instruction sent by the electronic device, the rotating shaft 32B is driven to drive the rotor 33B to rotate. In conjunction with FIG. 7 to FIG. 11, the circuit board 4 is rotated. A distance parameter between sensors is a fixed value. Therefore, after receiving the driving instruction, the sensor switching software may calculate the switching time of switching to the target sensor according to the distance parameter. When the switching time is met, the sensor switching software terminates the driving of the hardware structure in the electronic device. At this time, the sensor on the circuit board will just turn to the sensor detection hole 11 of the housing 1 to perform signal detection through the sensor detection hole 11. On the other hand, when the circuit board 4 is rotated to the sensor, the connector 51 on the main board 5 will come into contact with a feed point of the contact terminal 21' to which the sensor is connected, so that the electrical function is effective. At this time, the connector 51 can acquire data, when the target sensor performs signal measurement through the sensor detection hole 11, by the contact terminal 21' in contact.

### Embodiment 3

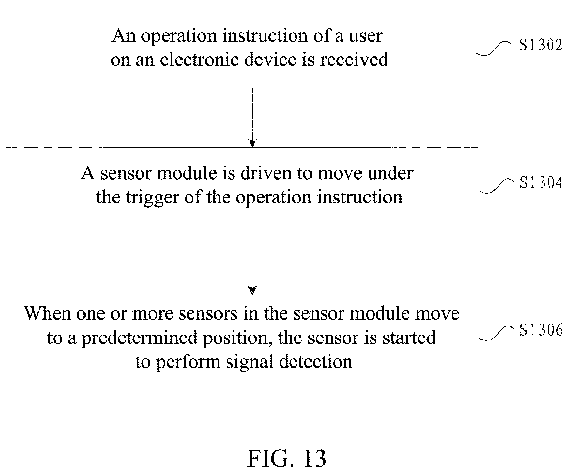

In the present embodiment, a signal detection method in which driving is from a UI interface and converted into motor drive is provided. FIG. 13 is a flowchart of a signal detection method according to an embodiment of the present invention. As shown in FIG. 13, the method includes the following steps.

In S1302, an operation instruction of a user on an electronic device is received.

Alternatively, the operation instruction generated by the operation of the user on an operation interface of the electronic device is received.

Alternatively, the operation instruction is an instruction to switch a current sensor to a target sensor.

In S1304, a sensor module is driven to move under the trigger of the operation instruction.

In S1306, when one or more sensors in the sensor module move to a predetermined position, the sensor is started to perform signal detection.

Specifically, since a distance parameter between two sensors is a fixed value, after receiving the operation instruction, an instruction for operating to switch a current sensor to one or more sensors is translated into a time parameter or distance parameter of switching to the target sensor.

Alternatively, the hardware structure is a hardware processor in the electronic device, and may be embodied as a chip or other integrated circuit structures.

Specifically, when the driving apparatus is a motor, driving the rotation of the circuit board in the electronic device may be implemented in the following way: after receiving the operation instruction, the motor body in the motor drives the rotating shaft to rotate the rotor so as to rotate the circuit board.

### Embodiment 4

The embodiment of the present invention also provides a storage medium. Alternatively, in the present embodiment, the above storage medium may be arranged to store program codes for performing the following steps.

In S1, an operation instruction of a user on an electronic device is received.

In S2, a sensor module is driven to move under the trigger of the operation instruction.

In S3, when one or more sensors in the sensor module move to a predetermined position, the sensor is started to perform signal detection.

Alternatively, in the present embodiment, the above storage medium may include, but is not limited to, various media capable of storing program codes such as a USB flash drive, a Read-Only Memory (ROM), a Random Access Memory (RAM), a mobile hard disk, a magnetic disk or an optical disk.

Alternatively, in the present embodiment, the processor receives the operation instruction generated by the operation of the user on an operation interface of the electronic device according to the program codes stored in the storage medium.

Alternatively, the specific examples in the present embodiment may refer to the examples described in the above embodiments and alternative implementation manners, and details are not described herein again. The above is only a preferred embodiment of the present invention, and is not intended to limit the present invention. For those skilled in the art, various modifications and changes can be made to the present invention. Any modifications, equivalent replacements, improvements and the like made within the spirit and principle of the present invention are intended to be included within the scope of protection of the present invention.

### Industrial Applicability

The embodiments of the present invention provide an electronic device and a signal detection method. The electronic device provided by the embodiment of the present invention solves the problem in the related art that more sensors cannot be disposed in an electronic device. Thus, more sensors can be simply and conveniently disposed in an electronic device. Furthermore, the objective of switching to a sensor specified by a user according to actual demands is also achieved.

## Claims

1. An electronic device, comprising: a housing (1), a sensor module (2) and a driving apparatus (3), wherein
the sensor module (2) is disposed in the housing (1) and comprises one or more sensors (21); and
the driving apparatus (3) is disposed in the housing (1), connected to the sensor module (2), and arranged to drive the sensor module (2) to move, when the one or more sensors (21) move to a predetermined position, to trigger the sensor having moved to the predetermined position to start signal acquisition.

2. The electronic device according to claim 1, wherein the sensor module (2) further comprises:
a circuit board, connected to the driving apparatus (3), the one or more sensors (21) being disposed on one or two surfaces of the circuit board (4).

3. The electronic device according to claim 1, wherein the housing (1) is further provided with a sensor detection hole (11), wherein
when the one or more sensors (21) move to a detection hole (11) corresponding to the predetermined position, the sensor having moved to the predetermined position performs signal detection through the detection hole (11).

4. The electronic device according to claim 2, wherein one or a plurality of contact terminals (21') respectively connected to the one or more sensors (21) are disposed on one or two surfaces of the circuit board (4);
the electronic device further comprises: a main board (5), assembled on the housing (1), wherein a connector (51) is fixed to the main board (5), and the connector (51) is respectively in contact with contact terminals corresponding to the one or more sensors (21) in the plurality of contact terminals (21'), so as to enable the sensor having moved to the predetermined position.

5. The electronic device according to claim 4, wherein the circuit board (4) further comprises: one or more positioning holes (41), located on the circuit board (4); and
the main board (5) further comprises: a positioning probe (52), fixed to the main board (5), the positioning probe (52) being inserted into at least one positioning hole in the one or more positioning holes (41) when the connector (51) contacts the contact terminal (21'), so as to fix the circuit board (4).

6. The electronic device according to claim 1 or 6, wherein the driving apparatus (3) comprises: a dial (3A) or a motor (3B).

7. The electronic device according to claim 6, wherein a dial plate (31A) is a disk structure with a toothed edge, and the circuit board (4) is a toothed disk structure that cooperates with the dial plate (31A).

8. The electronic device according to claim 6, further comprising: a controller, arranged to generate an operation instruction for driving the motor (3B), wherein
the motor (3B) is fixed to the main board (5) and arranged to drive the circuit board (4) to rotate when receiving the operation instruction sent by the controller.

9. The electronic device according to claim 4, wherein the plurality of contact terminals (21') and the connector (51) are both of array arrangement structure.

10. A method for detecting signals, comprising:
receiving an operation instruction of a user on an electronic device;
driving a sensor module in the electronic device to move under trigger of the operation instruction; and
when one or more sensors in the sensor module move to a predetermined position, starting the sensor to perform signal detection.

11. The method according to claim 10, wherein receiving an operation instruction of a user on an electronic device comprises:
receiving the operation instruction generated by operations of the user on an operation interface of the electronic device.

12. A computer readable storage medium, storing a computer executable instruction, the computer executable instruction being used to execute the method for detecting signals according to any one of claims 10 to 11.
